(19) Europäisches Patentamt
European Patent Office
Office européen des brevets

(11) **EP 3 293 390 A1**

(12) **DEMANDE DE BREVET EUROPEEN**

(43) Date de publication:
**14.03.2018   Bulletin 2018/11**

(21) Numéro de dépôt: **17187186.6**

(22) Date de dépôt: **22.08.2017**

(51) Int Cl.:
*F02M 26/05* (2016.01)      *F02M 26/25* (2016.01)
*F02M 26/28* (2016.01)      *F02M 26/49* (2016.01)
*F02D 41/26* (2006.01)      *F02D 41/14* (2006.01)
*F02M 26/26* (2016.01)      *F02D 21/08* (2006.01)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité:  **07.09.2016   FR 1658281**

(71) Demandeur: **PSA Automobiles SA
78300 Poissy (FR)**

(72) Inventeur: **ACHIR, Ali
78955 Carrières sous Poissy (FR)**

(54)     **SYSTÈME DE COMMANDE D'UN ACTIONNEUR D'UNE VANNE BY-PASS D'UN ÉCHANGEUR THERMIQUE D'EGR**

(57)     Le système de commande comprend un générateur de consignes de position du volet (Cons_$\theta$*) et de vitesse du volet (Cons_$\omega$*), des dispositifs (1, 2) de génération de composante de commande (Com_c1, Com_c2), un dispositif (3) de détermination d'un signal de commande (Com_u) de l'actionneur (100) relié au dispositif (1) de génération de la première composante et, par l'intermédiaire d'un élément de commutation (5), au dispositif (2) de génération de la deuxième composante, ledit élément de commutation (5) peut être commandé soit dans une position de déconnexion du dispositif (2) de génération de la deuxième composante de commande, soit dans une position de connexion du dispositif (2) de génération de la deuxième composante de commande (Com_c2).

Fig. 2

EP 3 293 390 A1

**Description**

La présente invention concerne un système de commande d'un actionneur destiné à actionner un volet mobile d'une vanne by-pass d'un échangeur thermique d'un circuit de recirculation de gaz d'échappement, ou circuit EGR (de l'anglais « Exhaust Gas Recirculation »). L'invention trouve une application particulièrement avantageuse, mais non exclusive, dans le domaine des véhicules automobiles équipés d'un moteur à combustion interne de type Diesel ou essence.

Un échangeur de circuit de recirculation des gaz d'échappement (ou échangeur EGR) et sa vanne by-pass - ou vanne trois voies - correspondante, dite vanne d'échangeur, constituent un élément important du circuit de recirculation de gaz d'échappement contribuant à améliorer la dépollution du moteur à combustion interne. Ce dispositif permet d'abaisser la température des gaz d'échappement « recirculés », c'est-à-dire dirigés dans l'admission, et donc la température de ces gaz d'échappement recirculés en entrée du moteur. On améliore ainsi le taux d'EGR (rapport entre le volume des gaz d'échappement récupérés par l'EGR et le volume total de gaz à l'admission) afin de limiter les émissions de particules polluantes, telles que les oxydes d'azote (ou "NOx").

Traditionnellement, le volet de la vanne by-pass est actionné par un actionneur pneumatique muni d'une électrovanne via le circuit de vide (dépression) secondaire du véhicule. L'électrovanne est généralement pilotée par un hacheur électrique sans avoir recours à l'utilisation d'un capteur de position. Le capteur de position est donc seulement réservé au besoin de diagnostic ou supprimé complètement dans certaines applications. Le pilotage d'un tel système se fait simplement par une électrovanne ON/OFF.

L'actionnement pneumatique du volet du by-pass peut présenter de nombreux inconvénients : Entrée d'eau dans le système de dépression par la mise à l'air des électrovannes, perte de charge dans le cas où un piquage est réalisé au niveau du filtre à air, sensibilité à l'altitude à cause de la baisse de la pression atmosphérique, défaillance de l'électrovanne, rupture ou fuite des tuyaux et des durites, impossibilité d'actionner la vanne by-pass dans le cas où le moteur est arrêté car la pompe à vide n'est plus entraînée (cette phase de vie étant utile pour réaliser le décrassage du volet du by-pass).

De façon alternative, la vanne by-pass d'échangeur peut être contrôlée par un actionneur électrique. Celui-ci peut être équipé d'un ressort de rappel ou en être dépourvu. Ce ressort de rappel est lié mécaniquement à l'axe de rotation du volet et permet de ramener le volet en position sûre dans le cas de la défaillance de l'actionneur. Dans le cas contraire, un diagnostic doit être réalisé pour protéger le moteur du véhicule en cas où le volet ne peut pas être ramené à ladite position sûre.

Il existe en définitive différents types d'actionneurs de vanne by-pass d'échangeur thermique de circuit de recirculation de gaz d'échappement. En outre, ces actionneurs peuvent être commandés de différentes façons. La loi de commande de l'actionneur doit être adaptée aux caractéristiques de l'actionneur et/ou au type de commande souhaitée. Il en résulte que le système de pilotage ou de commande de l'actionneur de la vanne by-pass doit être spécifiquement adapté à cet actionneur.

Un but de la présente invention est de répondre aux inconvénients de l'art antérieur mentionnés ci-dessus et en particulier, tout d'abord, de permettre un pilotage flexible d'un actionneur de vanne by-pass d'échangeur thermique EGR, ou de circuit de recirculation de gaz d'échappement, pouvant s'adapter au type d'actionneur et/ou au type de commande souhaitée.

A cet effet, l'invention concerne un système de commande d'un actionneur destiné à actionner un volet mobile d'une vanne by-pass d'un échangeur thermique d'un circuit de recirculation de gaz d'échappement d'un moteur à combustion interne d'un véhicule automobile, ladite vanne by-pass étant destinée à contrôler un débit de gaz d'échappement circulant à travers ledit échangeur thermique et un débit de gaz d'échappement circulant à travers un conduit court-circuitant ledit échangeur thermique, caractérisé en ce qu'il comprend

- un générateur de consignes apte à délivrer, sur une première sortie, une consigne de position du volet et, sur une deuxième sortie, une consigne de vitesse du volet ;
- un dispositif de génération d'une première composante de commande, apte à générer une première composante de commande à partir de la consigne de vitesse ou d'une mesure de la vitesse du volet, l'une de ces deux informations pouvant être utilisée seule ou avec la consigne de position du volet ou avec une mesure de la position du volet;
- un dispositif de génération d'une deuxième composante de commande, comportant un régulateur en boucle fermée, apte à générer une deuxième composante de commande en fonction de la mesure de la position du volet,
- un dispositif de détermination d'un signal de commande de l'actionneur relié au dispositif de génération de la première composante et, par l'intermédiaire d'un premier élément de commutation, au dispositif de génération de la deuxième composante, ledit premier élément de commutation pouvant être commandé :

    o soit dans une position de déconnexion du dispositif de génération de la deuxième composante de commande, permettant d'obtenir un signal de commande en boucle ouverte qui est fonction uniquement de la première composante de commande,

o soit dans une position de connexion du dispositif de génération de la deuxième composante de commande, permettant d'obtenir un signal de commande en boucle fermée qui est fonction de la première et de la deuxième composantes de commande ;

- un dispositif de paramétrage agencé pour commander ledit premier élément de commutation en position de déconnexion, dans le cas où l'actionneur est dépourvu de capteur de position, et en position de connexion, dans le cas où l'actionneur comporte un capteur de position.

Le système de commande de l'invention offre la possibilité de piloter l'actionneur sans capteur de position, en boucle ouverte, ou avec un capteur de position, en boucle fermée. La première option (sans capteur, en boucle ouverte) est à privilégier en cas d'une économie technique du capteur de position. Dans ce cas, l'actionneur est de préférence robuste aux efforts d'impacts sur les butées du volet. La deuxième option (avec capteur, en boucle fermée) est à privilégier en cas de non robustesse de la commande en boucle ouverte, la vitesse d'impact sur les butées pouvant être trop élevée.

Dans une première forme de réalisation, le dispositif de génération de la première composante de commande comprend une première entrée reliée à la première sortie du générateur de consignes, par l'intermédiaire d'un deuxième élément de commutation, et une deuxième entrée reliée à la deuxième sortie du générateur de consignes, ledit deuxième élément de commutation pouvant être commandé :

◦ soit dans une position de déconnexion permettant d'obtenir une première composante de commande qui est fonction uniquement de la consigne de vitesse,

◦ soit dans une position de connexion à la première sortie du générateur de consignes permettant d'obtenir une première composante de commande qui est fonction de la consigne de vitesse et de la consigne de position ;

et, ledit premier élément de commutation étant en position de déconnexion, le dispositif de paramétrage est agencé pour commander ledit deuxième élément de commutation en position de déconnexion, dans le cas où l'actionneur sans capteur de position est dépourvu de ressort de rappel, et en position de connexion à la première sortie du générateur de consignes, dans le cas où l'actionneur sans capteur de position comporte un ressort de rappel.

Une telle configuration du système de commande permet d'adapter le signal de commande aux actionneurs avec ressort de rappel et aux actionneurs sans ressort de rappel, dans le cas d'un pilotage en boucle ouverte adapté à un actionneur sans capteur de position.

Dans une deuxième forme de réalisation, le dispositif de génération de la première composante de commande comprend une première entrée reliée à la première sortie du générateur de consignes, par l'intermédiaire d'un deuxième élément de commutation, et une deuxième entrée reliée à la deuxième sortie du générateur de consignes, ledit deuxième élément de commutation pouvant être commandé :

◦ soit dans une position de déconnexion permettant d'obtenir une première composante de commande qui est fonction uniquement de la consigne de vitesse,

◦ soit dans une position de connexion à la première sortie du générateur de consignes permettant d'obtenir une première composante de commande qui est fonction de la consigne de vitesse et de la consigne de position ;

et, ledit premier élément de commutation étant en position de connexion, le dispositif de paramétrage est agencé pour commander ledit deuxième élément de commutation en position de déconnexion, dans le cas où l'actionneur équipé d'un capteur de position est dépourvu de ressort de rappel, et en position de connexion à la première sortie du générateur de consignes, dans le cas où l'actionneur équipé d'un capteur de position comporte un ressort de rappel.

Une telle configuration du système de commande permet d'adapter le signal de commande aux actionneurs avec ressort de rappel et aux actionneurs sans ressort de rappel, dans le cas d'un pilotage en boucle fermée adapté à un actionneur équipé d'un capteur de position.

Dans une troisième forme de réalisation, le système de commande est caractérisé en ce que

- le dispositif de génération de la première composante de commande est relié à la deuxième sortie du générateur de consignes par l'intermédiaire d'un troisième élément de commutation pouvant être placé :

◦ soit dans une position de connexion à la deuxième sortie du générateur de consignes délivrant la consigne de vitesse,

◦ soit dans une position de connexion à une sortie de l'actionneur dotée d'un dérivateur délivrant une mesure de la vitesse du volet,

- le deuxième élément de commutation peut être placé dans une position de connexion à une sortie de l'actionneur délivrant une mesure de la position du volet ;
- le dispositif de paramétrage est agencé pour commander l'un au moins des deuxième et troisième éléments de commutation en position de connexion à une sortie de l'actionneur (avantageusement soit les deuxième et troisième éléments de commutation en position de connexion, soit uniquement le troisième élément en position de connexion), dans le cas où l'actionneur comporte un capteur de position et qu'une compensation de non-linéarités du système de l'actionneur et de la vanne by-pass est souhaitée.

Le signal de commande peut ainsi intégrer, outre la deuxième composante de commande en boucle fermée, une première composante de commande de type rétroaction (fonction de grandeurs mesurées de vitesse et/ou de position du volet), adaptée pour compenser des non-linéarités de l'actionneur ou de sa vanne by-pass. Notons que la première composante et la deuxième composante sont deux composantes de commande distinctes.

Avantageusement, le dispositif de paramétrage est agencé pour commander le deuxième élément de commutation en position de connexion à la sortie de l'actionneur délivrant la mesure de position et le troisième élément de commutation en position de connexion à la sortie de l'actionneur délivrant la mesure de vitesse, dans le cas où l'actionneur intègre un ressort de rappel, et pour commander le deuxième élément de commutation en position de déconnexion et le troisième élément de commutation en position de connexion à la sortie de l'actionneur délivrant la mesure de la vitesse, dans le cas où l'actionneur est dépourvu de ressort de rappel. La première composante de commande de type rétroaction, adaptée pour compenser des non-linéarités du système de l'actionneur et de la vanne by-pass, peut ainsi être également adaptée au cas d'un actionneur avec ressort de rappel et au cas d'un actionneur sans ressort de rappel.

Dans une forme de réalisation particulière, le dispositif de détermination du signal de commande comporte un additionneur destiné à additionner la première composante de commande et la deuxième composante de commande, lorsque le premier élément de commutation est en position de connexion.

Avantageusement, le dispositif de génération d'une première composante de commande utilise un modèle mathématique représentatif de l'actionneur pour calculer la première composante de commande.

L'invention concerne aussi un circuit EGR de recirculation de gaz d'échappement, comportant un conduit de recirculation, destiné à mettre en communication un collecteur de gaz d'échappement et un conduit d'admission d'un moteur à combustion interne d'un véhicule automobile, une vanne EGR destinée à contrôler la quantité de gaz d'échappements dirigés vers le conduit d'admission, un échangeur thermique monté sur ledit conduit de recirculation, une vanne by-pass d'échangeur destinée à contrôler un débit de gaz d'échappement circulant à travers ledit échangeur thermique et un débit de gaz d'échappement circulant à travers un conduit de court-circuit dudit échangeur thermique, un actionneur destiné à actionner un volet mobile de la vanne by-pass d'échangeur, caractérisé en ce que l'actionneur est contrôlé par un système de commande tel que précédemment défini.

L'invention concerne encore un moteur à combustion interne d'un véhicule automobile équipé d'un circuit EGR et/ou un système de commande tels que définis précédemment.

L'invention concerne enfin un véhicule automobile intégrant un système de commande et/ou un circuit EGR et/ou un moteur à combustion interne, tels que précédemment définis.

D'autres caractéristiques et avantages de la présente invention apparaîtront plus clairement à la lecture de la description détaillée qui suit d'une forme de réalisation particulière de l'invention donnée à titre d'exemple nullement limitatif et illustré par les dessins annexés, dans lesquels :

La figure 1 est une représentation schématique d'une architecture d'un moteur à combustion interne équipé d'une vanne by-pass d'échangeur thermique d'un circuit EGR de recirculation de gaz d'échappement.

La figure 2 est une représentation schématique d'un système de commande d'un actionneur d'une vanne by-pass d'échangeur thermique EGR, telle que celle de la figure 1, selon une forme de réalisation particulière de l'invention.

La figure 3 est une représentation schématique d'un actionneur électrique d'une vanne by-pass d'échangeur thermique EGR, telle que celle de la figure 1.

La figure 4A est une première représentation schématique d'un modèle mathématique de l'actionneur de la figure 3.

La figure 4B est une deuxième représentation schématique, simplifiée par rapport à la première, d'un modèle mathématique de l'actionneur de la figure 3.

La figure 5 est une représentation schématique d'opérations de calcul d'un signal de commande d'un actionneur de vanne by-pass d'échangeur EGR, dans un mode de commande en boucle ouverte adapté à un actionneur sans capteur de position.

La figure 6 est une représentation schématique d'opérations de calcul d'un signal de commande d'un actionneur de vanne by-pass d'échangeur EGR, dans un mode de commande en boucle fermée avec compensation de non-linéarités du système par rétroaction adapté à un actionneur avec capteur de position et avec ressort de rappel, selon un premier exemple de réalisation.

La figure 7 est une représentation schématique d'opérations de calcul d'un signal de commande d'un actionneur de vanne by-pass d'échangeur EGR, dans un mode de commande en boucle fermée avec compensation de non-linéarités du système par rétroaction adapté à un actionneur avec capteur de position et sans ressort de rappel, selon le premier exemple de réalisation.

La figure 8 est une représentation schématique d'opérations de calcul d'un signal de commande d'un actionneur de vanne by-pass d'échangeur EGR, dans un mode de commande en boucle fermée avec compensation de non-linéarités du système par rétroaction adapté à un actionneur avec capteur de position et avec ressort de rappel, selon un deuxième exemple de réalisation.

La figure 9 est une représentation schématique d'opérations de calcul d'un signal de commande d'un actionneur de vanne by-pass d'échangeur EGR, dans un mode de commande en boucle fermée avec compensation de non-linéarités du système par rétroaction adapté à un actionneur avec capteur de position et sans ressort de rappel, selon le deuxième exemple de réalisation.

La figure 10 est une représentation schématique d'opérations de calcul d'un signal de commande d'un actionneur de vanne by-pass d'échangeur EGR, dans un mode de commande en boucle fermée avec compensation par anticipation (ou action directe) adapté à un actionneur avec capteur de position et avec ressort de rappel.

La figure 11 est une représentation schématique d'opérations de calcul d'un signal de commande d'un actionneur de vanne by-pass d'échangeur EGR, dans un mode de commande en boucle fermée avec compensation par anticipation (ou action directe) adapté à un actionneur avec capteur de position et sans ressort de rappel.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées

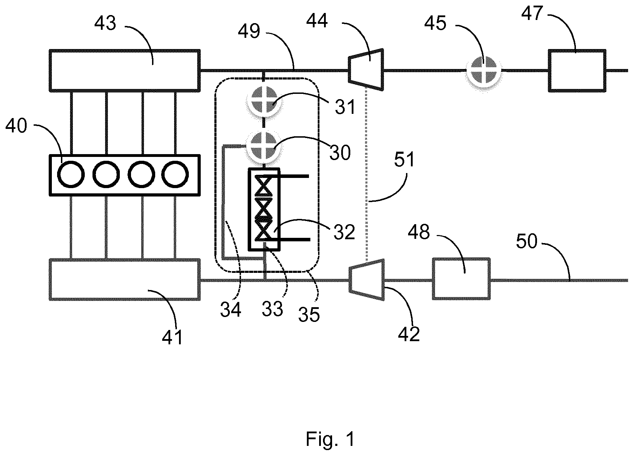

La figure 1 montre une architecture comportant un moteur à combustion interne 40 relié, en amont, à un dispositif d'admission 43 et, en aval, à un collecteur 41 de gaz d'échappement. Le moteur 40 est alimenté par le dispositif d'admission relié à un conduit d'admission 49 sur lequel sont disposés en série un compresseur 44, un doseur d'air 45 et un filtre à air 47, comme représenté sur la figure 1. Le compresseur 44 permet de comprimer l'air d'admission de manière à optimiser le remplissage des cylindres du moteur 40. L'écoulement des gaz d'échappement s'effectue à travers le collecteur 41 qui est connecté en aval à un conduit d'échappement 50 sur lequel sont disposés en série une turbine 42, laquelle entraîne alors en rotation le compresseur 44 par l'intermédiaire d'un arbre d'accouplement 51, et un filtre à particules 48.

En référence à la figure 1, le moteur est équipé d'un circuit 35 de recirculation de gaz d'échappement (dit "EGR" pour "Exhaust Gaz Recirculation" en anglais). Ce circuit EGR 35 est connecté entre le conduit d'échappement 50 et le conduit d'admission 49, ici en aval du compresseur 44 et en amont de la turbine 42. Ce circuit EGR 35 comprend :

- un conduit 33 établissant une mise en communication du conduit d'échappement 50 avec le conduit d'admission 49, sur lequel sont disposés en série un échangeur thermique EGR 32 de gaz d'échappement, une vanne by-pass d'échangeur EGR 30, et une vanne d'EGR 31,
- un conduit de court-circuit 34 de l'échangeur 32, court-circuitant l'échangeur thermique 32.

La vanne d'EGR 31 permet de contrôler le débit de gaz d'échappement réinjecté à l'admission, autrement dit la quantité de gaz d'échappement provenant du collecteur 41 et circulant à travers le circuit EGR pour être dirigés vers le dispositif d'admission 43.

La vanne by-pass d'échangeur 30 est destinée à contrôler le débit de gaz d'échappement circulant à travers l'échangeur thermique 32 et le débit de gaz d'échappement circulant à travers le conduit de court-circuit 34 de l'échangeur 32. La vanne by-pass 30 comporte un volet 36 mobile, ici en rotation, entraîné en mouvement par un actionneur 100.

Le circuit de recirculation de gaz d'échappement comprend également un système de commande 10 destiné à piloter ou contrôler l'actionneur 100. Il permet un pilotage agile, flexible et adaptatif qui peut s'adapter à des caractéristiques de l'actionneur - notamment selon qu'il est équipé ou non d'un capteur de position et/ou d'un ressort de rappel - et/ou au type de commande souhaité, comme cela apparaîtra dans la description détaillée qui suit. Le système de commande 10 peut être configuré selon la composition de l'actionneur 100 à piloter.

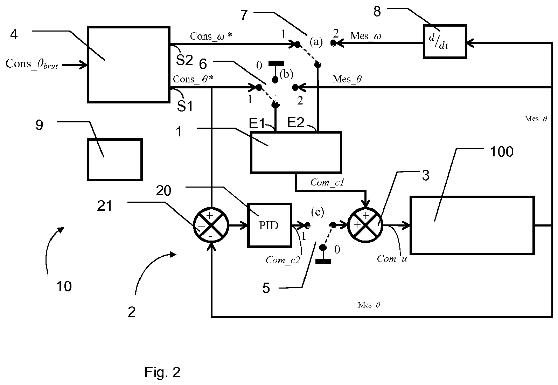

Sur la figure 2, on a représenté une forme de réalisation particulière de ce système de commande 10. Celui-ci comprend, comme représenté sur la figure 2, un générateur de consignes 4, un dispositif 1 de génération d'une première composante de commande, un dispositif 2 de génération d'une deuxième composante de commande, un dispositif 3 de détermination d'un signal de commande de l'actionneur 100 et un dispositif de paramétrage 9.

Le générateur de consignes 4 est apte à délivrer, sur une première sortie S1, une consigne « Cons_$\theta$* » de position du volet 36 (ici une position angulaire $\theta$) et, sur une deuxième sortie S2, une consigne de vitesse « Cons_$\omega$* » du volet. Il reçoit en entrée une stratégie de pilotage de la température du moteur, de niveau supérieur, par une consigne brute « Cons_$\theta_{brut}$ » de position du volet 36, et délivre en sortie les consignes de position Cons_$\theta$* et de vitesse Cons_$\omega$*

en utilisant une fonction de transfert par exemple de la forme : $\dfrac{Cons\_\theta^*(s)}{Cons\_\theta_{brut}(s)} = \dfrac{1}{(s+a)^2}$. Un tel générateur de consignes est connu dans l'art antérieur.

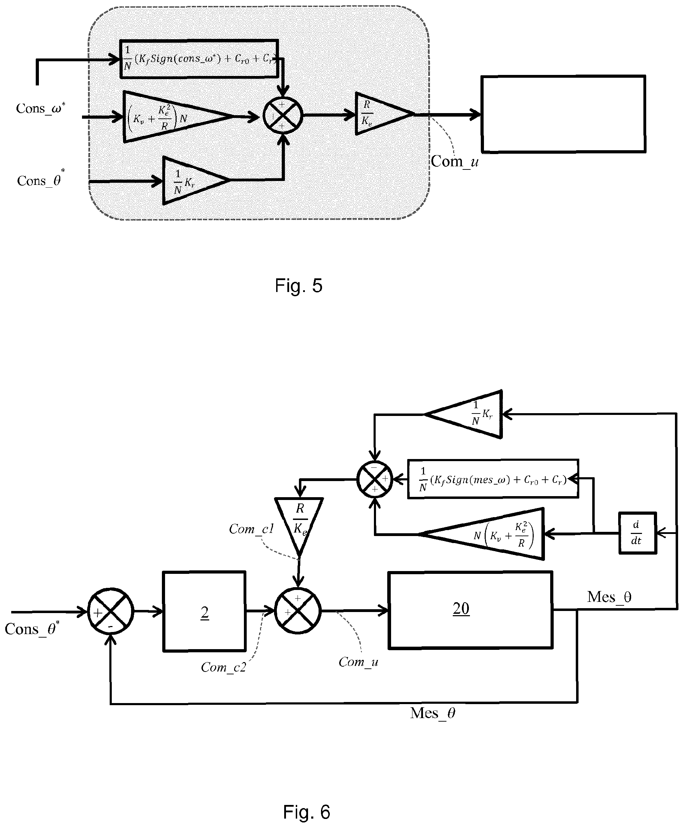

Le dispositif 1 de génération d'une première composante de commande, est apte à générer une première composante de commande « Com_c1 » à partir de partir de la consigne de vitesse Cons_ω* ou d'une mesure de la vitesse du volet Mes_ω, l'une de ces deux informations pouvant être utilisée seule ou avec la consigne de position du volet Cons_θ* ou avec une mesure de la position du volet Mes_θ,. A cet effet, il réalise des opérations mathématiques qui seront explicitées plus en détail par la suite en référence aux exemples de réalisation des figures 5 à 11 et dans un tableau des configurations possibles du système de commande.

Le dispositif 2 de génération d'une deuxième composante de commande, comporte un régulateur 20, destiné à faire de la régulation ou du contrôle en boucle fermée, par exemple un régulateur PID (proportionnel, intégrateur, dérivateur). Ce régulateur 20 est destiné à générer une deuxième composante de commande « Com_c2 » en fonction d'une mesure de la position du volet «Mes_θ ». Il est connecté à une sortie de l'actionneur 100 délivrant une mesure Mes_θ de la position du volet 36. En outre, le régulateur 20 est ici relié à la première sortie S1 du générateur de consignes, délivrant une consigne de position Cons_θ*. Un additionneur-soustracteur 21 est relié, en entrée, à la sortie de l'actionneur 100 délivrant la mesure de position Mes_θ et à la première sortie S1 du générateur de consignes 4 et, en sortie, au régulateur 20, comme représenté sur la figure 2. Par l'intermédiaire de cet additionneur-soustracteur 21, le régulateur 20 reçoit ici en entrée la consigne de position Cons_θ* diminuée de la mesure de position Mes_θ et délivre en sortie la composante de commande Com_c2.

Le dispositif 3 est destiné à déterminer un signal « Com_u » de commande de l'actionneur 100. Ce signal de commande Com_u comprend une tension de commande du moteur d'entraînement en déplacement du volet 36. Dans l'exemple de réalisation particulier décrit ici, il comprend un additionneur destiné à additionner la composante de commande Com_c1 et la composante de commande Com_c2 pour calculer le signal de commande Com_u. Ce signal de commande Com_u est une commande en tension d'un moteur d'entraînement du volet 36.

Le dispositif de détermination 3 est relié (directement) au dispositif 1 de génération de la première composante de commande et, par l'intermédiaire d'un premier élément de commutation 5, au dispositif 2 de génération de la deuxième composante.

Ce premier élément de commutation 5 peut être commandé (positionné) :

o soit dans une position « 0 » de déconnexion du dispositif 2 de génération de la deuxième composante de commande, dans laquelle le dispositif de génération 2 n'est pas connecté au dispositif 3 de détermination du signal de commande et ne délivre donc pas une deuxième de composante de commande à celui-ci ;
o soit dans une position « 1 » de connexion du dispositif 2 de génération de la deuxième composante de commande, dans laquelle le dispositif de génération 2 est connecté au dispositif 3 de détermination du signal de commande et délivre une deuxième de composante de commande à celui-ci.

La position de déconnexion « 0 » de l'élément de commutation 5 permet d'obtenir un signal de commande Com_u en boucle ouverte qui est fonction uniquement de la première composante de commande Com_c1. La position de connexion « 1 » permet d'obtenir un signal de commande Com_u en boucle fermée qui est fonction de la première et de la deuxième composantes de commande Com_c1 et Com_c2.

Le dispositif 1 de génération de la première composante de commande comprend une première entrée E1 reliée à la première sortie S1 du générateur de consignes 4 et ici à une sortie de l'actionneur 100 délivrant une mesure de position Mes_θ du volet, par l'intermédiaire d'un deuxième élément de commutation 6.

Le deuxième élément de commutation 6 peut être commandé (positionné):

- soit dans une position « 0 » de déconnexion, dans laquelle le premier dispositif de génération n'est connecté ni au générateur de consignes 4 ni à l'actionneur 100, permettant d'obtenir une première composante de commande Com_c1 qui est fonction uniquement de la consigne de vitesse Cons_ω* (comme cela sera explicité plus loin);
- soit une position « 1 » de connexion à la première sortie S1 du générateur de consignes 4, permettant d'obtenir une première composante de commande Com_c1 qui est fonction de la consigne de vitesse Cons_ω* et de la consigne de position Cons_θ* (comme cela sera explicité plus loin)
- soit dans une position « 2 » de connexion à la sortie de l'actionneur 100 délivrant la mesure de position Mes_θ, permettant d'obtenir une première composante de commande Com_c1 ayant un rôle de compensation de non-linéarités du système de l'actionneur 100 et de sa vanne by-pass 30.

Le dispositif 1 de génération de la première composante de commande comprend une deuxième entrée E2 reliée à la deuxième sortie S2 du générateur de consignes 4 et ici à une sortie de l'actionneur 100 dotée d'un dérivateur 8 et délivrant une mesure de vitesse Mes_$\omega$ du volet 36, par l'intermédiaire d'un troisième élément de commutation 7.

Le troisième élément de commutation 7 peut être commandé (placé) :

- soit dans une position « 1 » de connexion à la deuxième sortie S2 du générateur de consignes 4 délivrant la consigne de vitesse Cons_$\omega$*,
- soit dans une position « 2 » de connexion à la sortie de l'actionneur 100 dotée du dérivateur 8 et délivrant une mesure de la vitesse du volet Mes_$\omega$.

Le dispositif de paramétrage 9 est agencé pour commander le premier élément de commutation 5 en position de déconnexion « 0 », dans le cas où l'actionneur 100 est dépourvu de capteur de position, et en position de connexion « 1 », dans le cas où l'actionneur 100 comporte un capteur de position. Dans le premier cas (sans capteur de position, élément de commutation 5 en position « 0 »), le système de commande de l'actionneur 100 en boucle ouverte à partir d'au moins l'une des deux consignes délivrées par le générateur 4.

Lorsque le premier élément de commutation 5 est en position de déconnexion (actionneur sans capteur de position), le dispositif de paramétrage 9 est agencé pour commander le deuxième élément de commutation 6 en position de déconnexion « 0 », dans le cas où l'actionneur 100 sans capteur de position est dépourvu de ressort de rappel, et en position« 1 » de connexion à la première sortie S1 du générateur de consignes 4, dans le cas où l'actionneur sans capteur de position comporte un ressort de rappel.

Lorsque le premier élément de commutation 5 est en position de connexion « 1 » (actionneur équipé d'un capteur de position), le dispositif de paramétrage 9 est agencé pour commander le deuxième élément de commutation 6 en position de déconnexion « 0 », dans le cas où l'actionneur équipé d'un capteur de position est dépourvu de ressort de rappel, et en position « 1 » de connexion à la première sortie S1 du générateur de consignes 4, dans le cas où l'actionneur équipé d'un capteur de position comporte un ressort de rappel.

Lorsque le premier élément de commutation 5 est en position de connexion « 1 » (actionneur équipé d'un capteur de position), le dispositif de paramétrage 9 est agencé pour commander l'un au moins des deuxième et troisième éléments de commutation 6 et 7 en position « 2 » de connexion à une sortie de l'actionneur, dans le cas où l'actionneur comporte un capteur de position et qu'une compensation de non-linéarités du système de l'actionneur 100 et de sa vanne by-pass 30 est souhaitée. Plus précisément, le dispositif de paramétrage 9:

- commande le deuxième élément de commutation 6 en position « 2 » de connexion à la sortie de l'actionneur délivrant la mesure de position et le troisième élément de commutation 7 en position « 2 » de connexion à la sortie de l'actionneur délivrant la mesure de vitesse, dans le cas où l'actionneur intègre un ressort de rappel, et
- commande le deuxième élément de commutation 6 en position de déconnexion « 0 » et le troisième élément de commutation 7 en position « 2 » de connexion à la sortie de l'actionneur délivrant la mesure de la vitesse du volet, dans le cas où l'actionneur est dépourvu de ressort de rappel.

Les différentes configurations de paramétrage possibles du système de commande, selon les positions respectives des éléments de commutation 5, 6 et 7, sont résumées dans le tableau ci-après, où (a), (b) et (c) représentent respectivement le troisième élément de commutation 7, le deuxième élément de commutation 6 et le premier élément de commutation 5 :

Tableau des configurations possibles du système de commande :

| c | a | b | Configuration | Type de commande |
|---|---|---|---------------|------------------|
| 0 | 1 | 1 | Sans capteur / avec ressort | Commande de la position en boucle ouverte |
| 0 | 1 | 0 | Sans capteur / sans ressort | Commande uniquement de la vitesse en |
|   |   |   |   | boucle ouverte |
| 1 | 1 | 1 | Avec capteur / avec ressort / action directe | Commande non linéaire de la position en boucle fermée |
| 1 | 1 | 0 | Avec capteur / sans ressort / action directe | Commande non linéaire de la position en boucle fermée |
| 1 | 2 | 2 | Avec capteur / avec ressort / rétroaction | Commande linéaire de la position en boucle fermée |
| 1 | 2 | 0 | Avec capteur / sans ressort / rétroaction | Commande linéaire de la position en boucle fermée |

Le paramétrage du système de commande 10 peut être réalisé manuellement par un opérateur, au moyen d'une interface utilisateur, ou de façon automatique, ou semi-automatique, à partir de capteurs ou autres dispositifs de détection capables de détecter des caractéristiques de l'actionneur, notamment la présence ou pas d'un capteur de position et d'un ressort de rappel dans l'actionneur.

Le dispositif 1 de génération d'une première composante de commande utilise un modèle mathématique représentatif de l'actionneur 100.

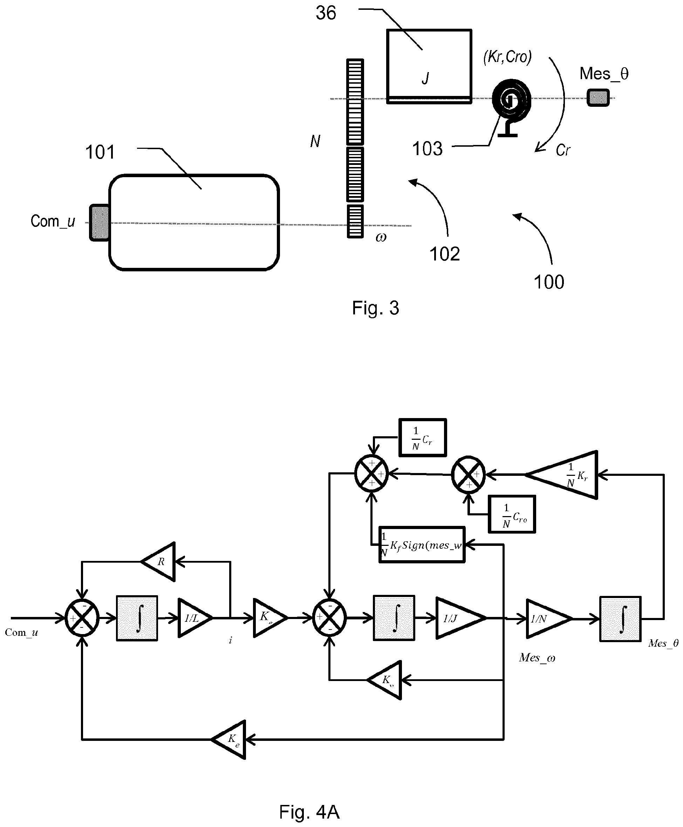

En référence à la figure 3, L'actionneur 100 de la vanne by-pass 30 d'échangeur EGR est conçu autour d'un moteur à courant continu 101, d'un train d'engrenage 102 et éventuellement d'un ressort de rappel 103, comme illustré figure 3.

L'actionneur 100 peut être représenté par un modèle mathématique linéaire qui peut être obtenu par simple écriture des équations physiques régissant le comportement de l'actionneur 100 de la vanne d'échangeur 30. Les paramètres de ce modèle sont fournis par le constructeur de l'actionneur 100. Le modèle comporte trois dynamiques principales qui sont :

- la dynamique de position :

  La relation entre la dérivée de la position angulaire $\theta$ du volet 36 et la position angulaire du l'axe du rotor du moteur électrique $\omega$ s'écrit :

$$\frac{d\theta}{dt} = \frac{1}{N}\omega \qquad (1)$$

  Où N représente le rapport de réduction du train d'engrenages 102.

- la dynamique de courant :

  Sous l'hypothèse que la force électromotrice est proportionnelle à la vitesse de rotation du rotor, la loi de Kirchhoff permet d'écrire l'équation électrique du moteur à courant continu suivante :

$$L\frac{di}{dt} = -K_e\omega - Ri + u \qquad (2)$$

  Où $R, L$ et $Ke$ représentent respectivement la résistance, l'inductance et la constante de force électromotrice du moteur à courant continu. Les variables $u$ et $i$ représentent quant à elles la tension de commande et le courant électrique du moteur à courant continu.

- la dynamique de vitesse :

  Grace à l'application de la seconde loi de Newton, l'équation régissant la dynamique de vitesse du système s'écrit :

$$J\frac{d\omega}{dt} = K_e i - K_v\omega - \frac{1}{N}K_r\theta - \frac{1}{N}C_{ro} - \frac{1}{N}C_r - K_f Sign(\omega) \qquad (3)$$

Où $J, Kf, Ke, Kr, Cro$ et $Cr$ représentent respectivement l'inertie, la constante de frottements visqueux, la constante de couple, la constante de raideur du ressort de rappel, sa précontrainte et le couple résistant dû aux efforts aérauliques. Afin d'obtenir un modèle stationnaire (non dépendant du temps), les effets de la température ne sont pas pris en compte.

Les équations (1) à (3) peuvent être représentées sous la forme du schéma bloc de la figure 4A.

Il est bien connu, dans le cas de la commande des machines électriques à courant continu, que la dynamique de courant est souvent négligeable au profit de la dynamique de position ou de vitesse. Cette simplification permet de réduire l'ordre du modèle et de simplifier ainsi la conception de la loi de commande. Elle permet également d'économiser le capteur de courant. En posant donc dans l'équation (2) $di/_{dt}$ = 0, il suit :

$$i = \frac{u - K_e \omega}{R} \qquad (4)$$

En remplaçant l'équation (4) dans l'équation (3), il suit :

$$\begin{cases} N \dfrac{d\theta}{dt} = \omega \\ J \dfrac{d\omega}{dt} = \dfrac{K_e}{R} u - \left( K_v + \dfrac{K_e^2}{R} \right) \omega - \dfrac{1}{N} K_r \theta - \dfrac{1}{N} \left( C_r + C_{ro} + K_f Sign(\omega) \right) \end{cases} \qquad (5)$$

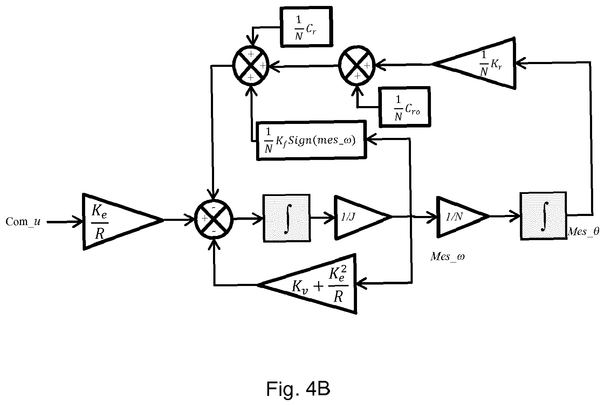

L'équation d'état (5) correspond au schéma bloc de la figure 4B qui constitue un modèle simplifié de l'actionneur 100. Dans le présent exemple de réalisation de l'invention, c'est le modèle de l'équation (5) qui est utilisé pour l'élaboration du signal de commande de l'actionneur.

Commande en boucle ouverte:

Dans le cas où l'actionneur 100 ne comporte pas de capteur de position, le système de commande 10 est configuré pour élaborer, en boucle ouverte (c'est-à-dire sans rétroaction à partir d'une mesure en sortie de l'actionneur), une commande de l'actionneur 100 par action directe ou anticipation (« feedforward » en anglais). Cette commande en boucle ouverte est basée seulement sur des consignes de position et/ou de vitesse. Le système de commande 10 génère, en boucle ouverte, un signal de commande Com_u à partir d'une consigne de vitesse Cons_$\omega$* et/ou de position Cons_$\theta$*. Une telle commande n'est pas robuste mais peut convenir si les exigences de performances ne sont pas sévères et si la tenue du volet l'autorise. Le signal de commande Com_$u$ s'écrit alors :

$$Com\_u = \frac{R}{K_e} \left[ \frac{1}{N} \left( K_r Sign(Cons\_\omega^*) + C_{r0} + C_r \right) + \left( K_v + \frac{K_e^2}{R} \right) Cons\_\omega^* + \frac{1}{N} K_r Cons\_\theta^* \right] \qquad (6)$$

Dans le cas où le système ne dispose pas d'un ressort de rappel, la commande Com_$u$ se réduit à :

$$Com\_u = \frac{R}{K_e} \left[ \frac{1}{N} \left( K_f Sign(Cons\_\omega^*) + C_r \right) + \left( K_v + \frac{K_e^2}{R} \right) Cons\_\omega^* \right] \qquad (7)$$

Dans ce dernier cas, on ne peut prescrire qu'une consigne de vitesse.
Cette loi de commande en boucle ouverte est représentée par le schéma bloc de la figure 5 (dans le cas d'un actionneur avec ressort de rappel).

Commande en boucle fermée

Dans le cas où l'actionneur 100 dispose d'un capteur de position de l'angle $\theta$ du volet 36, le système de commande 10 élabore une composante de commande Com_c2 en boucle fermée (l'élément de commutation 5 étant en position « 1 » de connexion). Dans ce cas, le dispositif 1 de génération d'une première commande Com_c1 peut être utilisée de deux façons différentes:

- pour introduire dans le signal de commande Com_u une compensation de non-linéarités et/ou de dynamiques du système (comportant l'actionneur 100 et la vanne by-pass d'échangeur 30), par rétroaction;
- pour introduire dans le signal de commande Com_u une compensation par action directe ou anticipation (« feedforward » en anglais), basée sur des consignes de vitesse et/ou de position.

Compensation par rétroaction de non-linéarités et de dynamiques du système
Deux modes de réalisation sont envisageables pour réaliser une telle compensation : L'un basé sur un système double intégrateur, l'autre basé sur un système de second ordre.

*Système double intégrateur*

En posant dans l'équation (5) :

$$Com\_u = \frac{R}{K_e}\left[\frac{K_e}{R}Com\_c2 + \frac{1}{N}(K_r Sign(Mes\_\omega) + C_{r0} + C_r) + \left(K_v + \frac{K_e^2}{R}\right)Mes\_\omega + \frac{1}{N}K_r Mes\_\theta\right] \quad (8)$$

où *Com_c2* est la deuxième composante de commande fournie, il suit :

$$\begin{cases} N\dfrac{dMes\_\theta}{dt} = Mes\_\omega \\ J\dfrac{dMes\_\omega}{dt} = \dfrac{K_e}{R}Com\_c2 \end{cases} \quad (9)$$

La fonction de transfert entre la position $\theta$ (ici la position mesurée Mes_θ) et la composante de commande *Com_c2* s'écrit alors :

$$\frac{Mes\_\theta(s)}{Com\_c2(s)} = \frac{K_e}{JNR}\cdot\frac{1}{s^2} \quad (10)$$

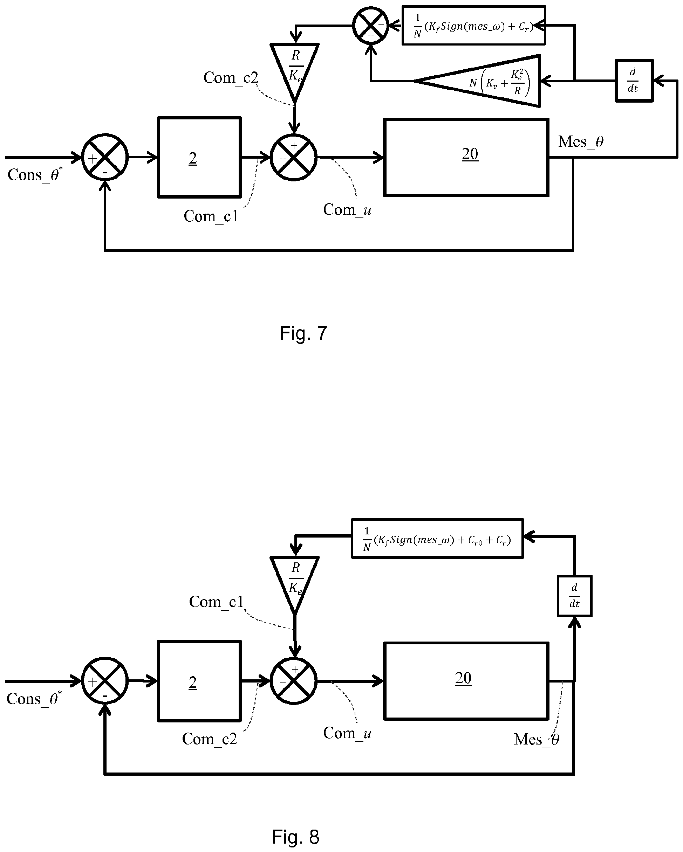

On obtient alors un système de type double intégrateur pouvant être stabilisé par un simple régulateur PID. Le signal de commande final Com_u de la vanne by-pass d'échangeur EGR est par conséquent la somme de deux composantes de commande ou de deux commandes : L'une issue du régulateur PID 2 (Com_c2) et l'autre issue d'une action par rétroaction ou « feedback » en anglais (Com_c1). Ce mode de réalisation est représenté par le schéma bloc de la figure 6, dans le cas où l'actionneur 100 comporte un ressort de rappel, et par le schéma bloc de la figure 7, dans le cas où l'actionneur 100 ne comporte pas de ressort de rappel.

*Système second ordre*

Dans ce cas, on ne compense que les non-linéarités du système, la commande Com_u s'écrit

$$Com\_u = \frac{R}{K_e}\left[\frac{K_e}{R}Com\_c2 + \frac{1}{N}(K_r Sign(Mes\_\omega) + C_{r0} + C_r)\right] \quad (11)$$

D'où il suit :

$$\begin{cases} N\dfrac{dMes\_\theta}{dt} = Mes\_\omega \\ J\dfrac{dMes\_\omega}{dt} = \dfrac{K_e}{R}Com\_c2 - \left(K_v + \dfrac{K_e^2}{R}\right)Mes\_\omega - \dfrac{1}{N}K_r Mes\_\theta \end{cases} \quad (12)$$

La nouvelle fonction de transfert entre la position $\theta$ (ici mesurée) et composante de commande Com_c2 s'écrit :

$$\frac{Mes\_\theta(s)}{Com\_c2(s)} = \frac{K_e}{JNR}\cdot\frac{1}{s^2 + \left(K_v + \dfrac{K_e^2}{R}\right)s + \dfrac{1}{N}K_r} \quad (13)$$

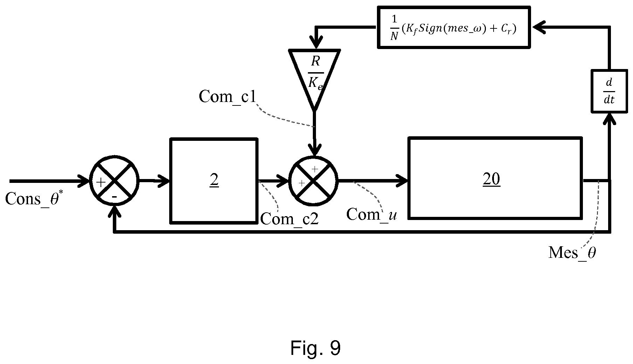

On obtient alors un système de type second ordre stable en boucle ouverte. L'avantage de cette solution et qu'elle exploite la robustesse du régulateur pour compenser les dispersions des paramètres du système. Le signal de commande final de la vanne by-pass d'échangeur EGR est aussi la somme de deux composantes de commande ou de deux commandes : L'une issue d'un régulateur PID classique (Com_c2) et l'autre issue d'une action par rétroaction (Com_c1). Ce mode de réalisation est représenté par le schéma bloc de la figure 8, dans le cas où l'actionneur 100 comporte un ressort de rappel, et par le schéma bloc de la figure 9, dans le cas où l'actionneur 100 ne comporte pas de ressort de rappel.

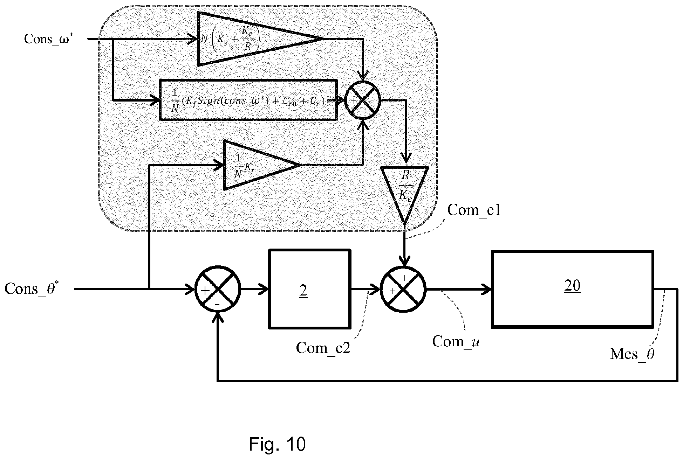

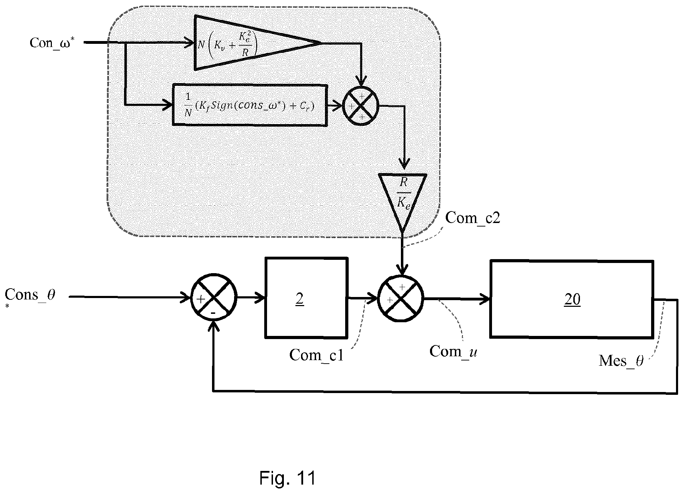

Compensation par action directe ou anticipation (« feedforward » en anglais) Dans ce mode de réalisation, le dispositif de génération 1 calcule la première composante de commande Com_c1 en fonction de la consigne de vitesse Cons_ω* et/ou de la consigne de position Cons_θ* (ici soit en fonction des deux consignes de vitesse et de position, soit en fonction de la consigne de vitesse). Il élabore ainsi une composante de commande, ou commande, par action directe ou anticipation ou « feedforward ». Dans le cas d'un suivi de consigne par la position θ du volet 36 (Mes_θ ≈ Cons_θ*), on peut obtenir des performances d'asservissement similaires à celles obtenues en réalisant la compensation par rétroaction ou feedback. En revanche, dans le cas de changements brutaux de la consigne, les deux modes de commande auront des performances différentes. Ce mode de réalisation est représenté par le schéma bloc de la figure 10, dans le cas où l'actionneur 100 comporte un ressort de rappel, et par le schéma bloc de la figure 11, dans le cas où l'actionneur 100 ne comporte pas de ressort de rappel.

Dans une forme de réalisation particulière, le système de commande comprend un calculateur et des modules logiciels destinés à mettre en oeuvre les différents éléments du système précédemment décrits, tels que les dispositifs de génération 1, 2, les éléments de commutation 5, 6 et 7 et le dispositif de détermination du signal de commande. Les modules logiciels comprennent des instructions logicielles pour mettre en oeuvre les lois ou modes de commande précédemment décrits lorsqu'elles sont exécutées par le calculateur.

Le système de commande 10 pourrait être dépourvu de mode de commande avec compensation de non-linéarités du système par rétroaction. Dans ce cas, le système 10 ne comprend pas de troisième élément de commutation 7 et le deuxième élément de commutation 6 n'a pas de position « 2 » de connexion à l'actionneur.

Le système de commande 10 pourrait aussi être dépourvu de mode de commande avec compensation par action directe ou anticipation. Dans ce cas, le système de commande 10 fonctionne soit en boucle ouverte, dans le cas d'un actionneur sans capteur de position, soit en boucle fermée sans compensation par une consigne de vitesse ou de vitesse et de position (autrement dit uniquement par régulation en fonction de la position mesurée du volet), dans le cas d'un actionneur équipé d'un capteur de position. Dans le premier cas (boucle ouverte), le signal de commande Com_u est élaboré à partir uniquement de la première composante de commande Com_c1 qui est fonction d'une consigne de vitesse ou bien d'une consigne de vitesse et d'une consigne de position. Dans le deuxième cas (boucle fermée), le signal de commande Com_u est élaboré à partir uniquement de la deuxième composante de commande Com_c2 qui est fonction de la consigne de position Cons_θ et de la mesure de position Mes_θ.

## Revendications

1. Système de commande d'un actionneur (100) destiné à actionner un volet mobile (36) d'une vanne by-pass (30) d'un échangeur thermique (32) d'un circuit (35) de recirculation de gaz d'échappement d'un moteur (40) à combustion interne d'un véhicule automobile, ladite vanne by-pass (30) étant destinée à contrôler un débit de gaz d'échappement circulant à travers ledit échangeur thermique (32) et un débit de gaz d'échappement circulant à travers un conduit (34) court-circuitant ledit échangeur thermique (32), **caractérisé en ce qu'**il comprend

   - un générateur de consignes (4) apte à délivrer, sur une première sortie (S1), une consigne de position du volet (Cons_θ*) et, sur une deuxième sortie (S2), une consigne de vitesse du volet (Cons_ω*) ;
   - un dispositif (1) de génération d'une première composante de commande (Com_c1), apte à générer une première composante de commande (Com_c1) à partir de la consigne de vitesse (Cons_ω*) ou d'une mesure de la vitesse du volet (Mes_ω), l'une de ces deux informations pouvant être utilisée seule ou avec la consigne de position du volet (Cons_θ*) ou avec une mesure de la position du volet (Mes_θ),
   - un dispositif (2) de génération d'une deuxième composante de commande (Com_c2), comportant un régulateur en boucle fermée (20), apte à générer une deuxième composante de commande (Com_c2) en fonction de la mesure de la position du volet (Mes_θ),
   - un dispositif (3) de détermination d'un signal de commande (Com_u) de l'actionneur (100) relié au dispositif (1) de génération de la première composante (Com_c1) et, par l'intermédiaire d'un premier élément de commutation (5), au dispositif (2) de génération de la deuxième composante, ledit premier élément de commutation (5) pouvant être commandé :

      o soit dans une position de déconnexion du dispositif (2) de génération de la deuxième composante de commande, permettant d'obtenir un signal de commande (Com_u) en boucle ouverte qui est fonction uniquement de la première composante de commande (Com_c1),
      o soit dans une position de connexion du dispositif (2) de génération de la deuxième composante de commande (Com_c2), permettant d'obtenir un signal de commande (Com_u) en boucle fermée qui est fonction de la première et de la deuxième composantes de commande (Com_c1, Com_c2) ;

- un dispositif de paramétrage (9) agencé pour commander ledit premier élément de commutation (5) en position de déconnexion, dans le cas où l'actionneur (100) est dépourvu de capteur de position, et en position de connexion, dans le cas où l'actionneur (100) comporte un capteur de position.

2. Système selon la revendication 1, **caractérisé en ce que** le dispositif de génération (1) de la première composante de commande (Com_c1) comprend une première entrée (E1) reliée à la première sortie (S1) du générateur de consignes (4), par l'intermédiaire d'un deuxième élément de commutation (6), et une deuxième entrée (E2) reliée à la deuxième sortie (S2) du générateur de consignes, ledit deuxième élément de commutation (6) pouvant être commandé :

   ◦ soit dans une position de déconnexion permettant d'obtenir une première composante de commande (Com_c1) qui est fonction uniquement de la consigne de vitesse (Cons_$\omega$*),
   ◦ soit dans une position de connexion à la première sortie (S1) du générateur de consignes (4) permettant d'obtenir une première composante de commande (Com_c1) qui est fonction de la consigne de vitesse (Cons_$\omega$*) et de la consigne de position (Cons_$\theta$*) ;

   et, ledit premier élément de commutation (5) étant en position de déconnexion, le dispositif de paramétrage (9) est agencé pour commander ledit deuxième élément de commutation (6) en position de déconnexion, dans le cas où l'actionneur (100) sans capteur de position est dépourvu de ressort de rappel, et en position de connexion à la première sortie (S1) du générateur de consignes (4), dans le cas où l'actionneur (100) sans capteur de position comporte un ressort de rappel.

3. Système selon la revendication 1, **caractérisé en ce que** le dispositif (1) de génération de la première composante de commande (Com_c1) comprend un première entrée (E1) reliée à la première sortie (S1) du générateur de consignes (4), par l'intermédiaire d'un deuxième élément de commutation (6), et une deuxième entrée (E2) reliée à la deuxième sortie (S2) du générateur de consignes (4), ledit deuxième élément de commutation (6) pouvant être commandé :

   ◦ soit dans une position de déconnexion permettant d'obtenir une première composante de commande (Com_c1) qui est fonction uniquement de la consigne de vitesse (Cons_$\omega$*),
   ◦ soit dans une position de connexion à la première sortie (S1) du générateur de consignes (4) permettant d'obtenir une première composante de commande (Com_c1) qui est fonction de la consigne de vitesse (Cons_$\omega$*) et de la consigne de position (Cons_$\theta$*) ;

   et, ledit premier élément de commutation (5) étant en position de connexion, le dispositif de paramétrage (9) est agencé pour commander ledit deuxième élément de commutation (6) en position de déconnexion, dans le cas où l'actionneur équipé d'un capteur de position est dépourvu de ressort de rappel, et en position de connexion à la première sortie (S1) du générateur de consignes (4), dans le cas où l'actionneur équipé d'un capteur de position comporte un ressort de rappel.

4. Système selon la revendication 3, **caractérisé en ce que**

   - le dispositif (1) de génération de la première composante de commande (Com_c1) est relié à la deuxième sortie (S2) du générateur de consignes (4) par l'intermédiaire d'un troisième élément de commutation (7) pouvant être placé :

      ◦ soit dans une position de connexion à la deuxième sortie (S2) du générateur de consignes (4) délivrant la consigne de vitesse (Cons_$\omega$*),
      ◦ soit dans une position de connexion à une sortie de l'actionneur (100) dotée d'un dérivateur (8) délivrant une mesure de la vitesse du volet (Mes_$\omega$),

   - le deuxième élément de commutation (6) peut être placé dans une position de connexion à une sortie de l'actionneur (100) délivrant une mesure (Mes_$\theta$) de la position du volet (36) ;
   - le dispositif de paramétrage (9) est agencé pour commander l'un au moins des deuxième et troisième éléments de commutation (6, 7) en position de connexion à une sortie de l'actionneur (100), dans le cas où l'actionneur

(100) comporte un capteur de position et qu'une compensation de non-linéarités du système de l'actionneur et de la vanne by-pass est souhaitée.

5. Système selon la revendication 4, **caractérisé en ce que** le dispositif de paramétrage (9) est agencé pour commander le deuxième élément de commutation (6) en position de connexion à la sortie de l'actionneur (100) délivrant la mesure de position (Mes_θ) et le troisième élément de commutation (7) en position de connexion à la sortie de l'actionneur (100) délivrant la mesure de vitesse (Mes_ω), dans le cas où l'actionneur (100) intègre un ressort de rappel, et pour commander le deuxième élément de commutation (6) en position de déconnexion et le troisième élément de commutation (7) en position de connexion à la sortie de l'actionneur (100) délivrant la mesure de la vitesse (Mes_ω), dans le cas où l'actionneur (100) est dépourvu de ressort de rappel.

6. Système selon l'une des revendications précédentes, **caractérisé en ce que** le dispositif (3) de détermination du signal de commande (Com_u) comporte un additionneur destiné à additionner la première composante de commande (Com_c1) et la deuxième composante de commande (Com_c2), lorsque le premier élément de commutation (5) est en position de connexion.

7. Système selon l'une des revendications précédentes, **caractérisé en ce que** le dispositif (1) de génération d'une première composante de commande utilise un modèle mathématique représentatif de l'actionneur (100) pour calculer la première composante de commande (Com_c1).

8. Circuit EGR (35) de recirculation de gaz d'échappement, comportant un conduit de recirculation (33), destiné à mettre en communication un collecteur de gaz d'échappement (42) et un conduit d'admission (49) d'un moteur à combustion interne (40) d'un véhicule automobile, une vanne EGR (31) destinée à contrôler la quantité de gaz d'échappements dirigés vers le conduit d'admission (49), un échangeur thermique (32) monté sur ledit conduit de recirculation (33), une vanne by-pass d'échangeur (30) destinée à contrôler un débit de gaz d'échappement circulant à travers ledit échangeur thermique (32) et un débit de gaz d'échappement circulant à travers un conduit (34) de court-circuit dudit échangeur thermique (32), un actionneur (100) destiné à actionner un volet mobile (36) de la vanne by-pass d'échangeur (30), **caractérisé en ce que** l'actionneur (100) est contrôlé par un système de commande (10) selon l'une des revendications 1 à 7 .

9. Moteur à combustion interne d'un véhicule automobile équipé d'un circuit EGR selon la revendication 8 et/ou d'un système de commande selon l'une des revendications 1 à 7.

10. Véhicule automobile intégrant un système de commande selon l'une des revendications 1 à 7 et/ou un circuit EGR selon la revendication 8 et/ou un moteur à combustion interne selon la revendication 9.

Fig. 1

Fig. 2

Fig. 3

Fig. 4A

Fig. 4B

Fig. 5

Fig. 6

Fig. 7

Fig. 8

$$\frac{1}{N}\left(K_f Sign(mes\_\omega) + C_r\right)$$

$$\frac{R}{K_e}$$

Com_c1

$$\frac{d}{dt}$$

Cons_$\theta^*$

2

20

Com_c2

Com_$u$

Mes_$\theta$

Fig. 9

Fig. 10

Fig. 11

**Europäisches Patentamt**
**European Patent Office**
**Office européen des brevets**

# RAPPORT DE RECHERCHE EUROPEENNE

Numéro de la demande

EP 17 18 7186

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 891 585 A1 (VALEO SYS CONTROLE MOTEUR SAS [FR]) 6 avril 2007 (2007-04-06) * page 3, ligne 14 - page 9, ligne 4; figures * ----- | 1-10 | INV. F02M26/05 F02M26/25 F02M26/28 F02M26/49 |
| A | FR 2 929 652 A1 (RENAULT SAS [FR]) 9 octobre 2009 (2009-10-09) * figures * ----- | 1-10 | F02D41/26 F02D41/14 F02M26/26 F02D21/08 |
| A | FR 2 909 719 A1 (RENAULT SAS [FR]) 13 juin 2008 (2008-06-13) * page 6 - page 8; figures * ----- | 1-10 | |

**DOMAINES TECHNIQUES RECHERCHES (IPC)**

F02M
F02D

Le présent rapport a été établi pour toutes les revendications

| Lieu de la recherche | Date d'achèvement de la recherche | Examinateur |
|---|---|---|
| Munich | 26 janvier 2018 | Aign, Torsten |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 17 18 7186

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-01-2018

| Document brevet cité au rapport de recherche | Date de publication | Membre(s) de la famille de brevet(s) | Date de publication |
|---|---|---|---|
| FR 2891585 A1 | 06-04-2007 | AUCUN | |
| FR 2929652 A1 | 09-10-2009 | EP 2257702 A1<br>FR 2929652 A1<br>JP 2011516777 A<br>US 2011112745 A1<br>WO 2009136028 A1 | 08-12-2010<br>09-10-2009<br>26-05-2011<br>12-05-2011<br>12-11-2009 |
| FR 2909719 A1 | 13-06-2008 | AUCUN | |

EPO FORM P0460

Pour tout renseignement concernant cette annexe : voir Journal Officiel de l'Office européen des brevets, No.12/82